# EUROPEAN PATENT APPLICATION

(11) **EP 4 726 792 A1**
(43) Date of publication of application: **15.04.2026**
(21) Application number: 25204187.6
(22) Date of filing: 24.09.2025
(51) Int. Cl.: H01M 4/04, H01M 4/139, B21B 37/18

(54) **ROLLING APPARATUS FOR MANUFACTURING ELECTRODE AND METHOD OF OPERATING THE ROLLING APPARATUS**

(30) Priority: 11.10.2024 KR 20240138764
(71) Applicant: SAMSUNG SDI CO., LTD., Yongin-si, Gyeonggi-do 17084 (KR)
(72) Inventor: RYU, Sang Hyun, 16678 Suwon-si, Gyeonggi-do (KR); RYU, Chang Hyun, 16678 Suwon-si, Gyeonggi-do (KR); LEE, Jae Hun, 16678 Suwon-si, Gyeonggi-do (KR); JO, Hyeon A, 16678 Suwon-si, Gyeonggi-do (KR); WOO, Hyung Min, 16678 Suwon-si, Gyeonggi-do (KR); LEE, Sang Hyun, 16678 Suwon-si, Gyeonggi-do (KR); CHA, Sung Hoon, 16678 Suwon-si, Gyeonggi-do (KR)
(74) Representative: Michalski Hüttermann & Partner Patentanwälte mbB

(57) **Abstract**

The present disclosure relates to a rolling apparatus for manufacturing an electrode and a method of operating the rolling apparatus. A mechanism for is provided for inputting a rolling gap between a first roller and a second roller for rolling an electrode, thereby minimizing a quality deviation of the electrode. To this end, the present disclosure provides a configuration for predicting a rolling gap value using a gap prediction model and performing control such that a rolling gap between a first roller and a second roller becomes the predicted rolling gap value.

## Description

### CROSS-REFERENCE TO RELATED APPLICATION

This application claims priority to and the benefit of Korean Patent Application No. 10-2024-0138764, filed on October 11, 2024.

### BACKGROUND

### 1. Field

The present disclosure relates to a rolling apparatus for manufacturing an electrode, in which a rolling gap is controlled during a rolling process, and a method of operating the rolling apparatus.

### 2. Description of the Related Art

Commercialized secondary batteries include nickel cadmium batteries, nickel hydrogen batteries, nickel zinc batteries, and lithium secondary batteries. Among these types of batteries, lithium secondary batteries are advantageous because they may be readily charged or discharged due to almost complete absence of memory effects, have a very low self-discharge rate, and have high energy density as compared to nickel-based secondary batteries.

A process of manufacturing lithium secondary batteries is mainly divided into three stages: an electrode forming process, an assembly process, and a formation process. The electrode formation process includes an active material mixing process, an electrode coating process, a rolling process, a slitting process, and a winding process. Among these, the rolling process is a process of pressing the electrode to a desired thickness by passing the electrode between two rollers. The rolling process reduces a thickness of an electrode on which the coating process is completed to increase capacity density and increase adhesion between an electrode current collector and an electrode active material,

In the rolling process, the thickness of the electrode is determined by a rolling gap between a first roller and a second roller. The second roller, which is positioned at a lower side among the first and second rollers, is position-adjusted and rolled using a servo valve. However, conventionally, the rolling gap has been adjusted manually based on an experience of an engineer. Such manual adjustment causes a problem in that a quality of the rolled electrodes varies according to differences in the experiences of the engineers.

The above information disclosed in this section is for enhancement of understanding of the background of the present disclosure and therefore may contain information that does not constitute related (or prior) art.

### SUMMARY

The present disclosure is directed to providing a rolling apparatus for manufacturing an electrode and a method of operating the rolling apparatus, in which a rolling gap value between a first roller and a second roller is automatically input during rolling of an electrode, thereby minimizing deviations in the rolled electrodes.

However, objects that the present disclosure achieves are not limited to the above-described objects and other objects that are not described may be clearly understood by those skilled in the art from the following description.

According to an aspect of the present disclosure, there is provided a rolling apparatus for manufacturing an electrode, the rolling apparatus including a rolling unit including a first roller and a second roller configured to form a rolling gap through which an electrode passes between the first roller and the second roller, a roller position adjustment unit configured to adjust a position of the second roller, and a control device configured to predict a rolling gap value using a gap prediction model and control the roller position adjustment unit such that the rolling gap approaches and preferably becomes the predicted rolling gap value.

The roller position adjustment unit may include a driving unit connected to the second roller, and a control valve configured to receive the predicted rolling gap value from the control device and control the driving unit to adjust the position of the second roller such that the rolling gap approaches and preferably becomes the predicted rolling gap value.

When a condition deduction instruction is input through a user interface, the control device may input a downtime and a previous gap value into the gap prediction model to predict the rolling gap value,

The downtime may represent a difference between a start time of a current rolling process and an end time of a previous rolling process.

The rolling apparatus may further include a thickness sensor configured to measure a thickness of the electrode that has passed between the first roller and the second roller.

The control device may compare a thickness of an electrode measured by the thickness sensor with a preset reference thickness range and may adjust the rolling gap when the thickness of the electrode is out of the reference thickness range.

The rolling apparatus may further include a server configured to collect process-related data including at least one of process data for a past set time, standard data, and derived data and the server may be configured to generate the gap prediction model using the collected process-related data.

By using the process-related data as an input characteristic and using an electrode thickness as an output characteristic, the server may select factors necessary for modeling by analyzing a correlation between the input characteristic and the output characteristic, may apply the selected factors to each of a plurality of machine learning models to predict the rolling gap value, may evaluate performance of each machine learning model based on the predicted rolling gap value, may select one of the machine learning models based on the performance of each machine learning model, and may provide the selected machine learning models as the gap prediction model.

The server may analyze the correlation between the input characteristic and the output characteristic using a feature importance technique.

The server may generate the gap prediction model using an exponential function-based regression equation that uses the selected factors as inputs and outputs the rolling gap value.

According to an aspect of the present invention, there is provided a method of operating a rolling apparatus for manufacturing an electrode, the rolling apparatus including a first roller and a second roller that form a rolling gap through which the electrode passes, a control device for controlling a roller position adjustment unit that adjusts a position of the second roller, the method including predicting a rolling gap value using a gap prediction model and controlling the roller position adjustment unit to adjust a position of the second roller such that the rolling gap approaches and preferably becomes the predicted rolling gap value.

However, effects that can be achieved through the present disclosure are not limited to the above-described effects and other effects that are not described may be clearly understood by those skilled in the art from the detailed descriptions.

### BRIEF DESCRIPTION OF DRAWINGS

The drawings attached to this specification illustrate embodiments of the present disclosure and describe aspects and features of the present disclosure together with the detailed description. The present disclosure is not limited to embodiments depicted in the drawings.
FIGS. 1 and 2 are conceptual views of a rolling apparatus for manufacturing an electrode according to an embodiment of the present disclosure;
FIG. 3 is a view of a second roller position adjustment unit according to an embodiment of the present disclosure;
FIG. 4 is an exemplary graph for describing a change in position of a second roller when the rolling apparatus is stopped according to an embodiment of the present disclosure;
FIG. 5 is a schematic block diagram illustrating a configuration of a control device according to an embodiment of the present disclosure;
FIG. 6 is an exemplary diagram for describing a rolling gap display screen according to an embodiment of the present disclosure;
FIG. 7 is a schematic block diagram illustrating a configuration of a server according to an embodiment of the present disclosure;
FIG. 8 is an exemplary diagram for describing factors necessary for modeling a gap prediction model according to an embodiment of the present disclosure;
FIG. 9 shows exemplary graphs for describing a gap adjustment deviation according to an embodiment of the present disclosure;
FIG. 10 is a flowchart of a method of operating a rolling apparatus for manufacturing an electrode according to an embodiment of the present disclosure;
FIG. 11 shows exemplary graphs for describing a thickness trend of an electrode according to an embodiment of the present disclosure; and
FIG. 12 is a flowchart of a method of generating a gap prediction model according to an embodiment of the present disclosure.

### DETAILED DESCRIPTION OF EXEMPLARY EMBODIMENTS

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Any numerical range disclosed and/or recited herein includes all sub-ranges of the same numerical precision subsumed within the recited range. For example, a range of "1.0 to 10.0" includes all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein includes all lower numerical limitations subsumed therein, and any minimum numerical limitation recited in this specification includes all higher numerical limitations subsumed therein. Accordingly, Applicant reserves the right to amend this specification, including the claims, to expressly recite any sub-range subsumed within the ranges expressly recited herein. All such ranges are intended to be inherently described in this specification.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an element is referred to as being disposed (or located or positioned) on the "above (or below)" or "on (or under)" a component, it may mean that the element is placed in contact with the upper (or lower) surface of the component and may also mean that another component may be interposed between the component and any element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

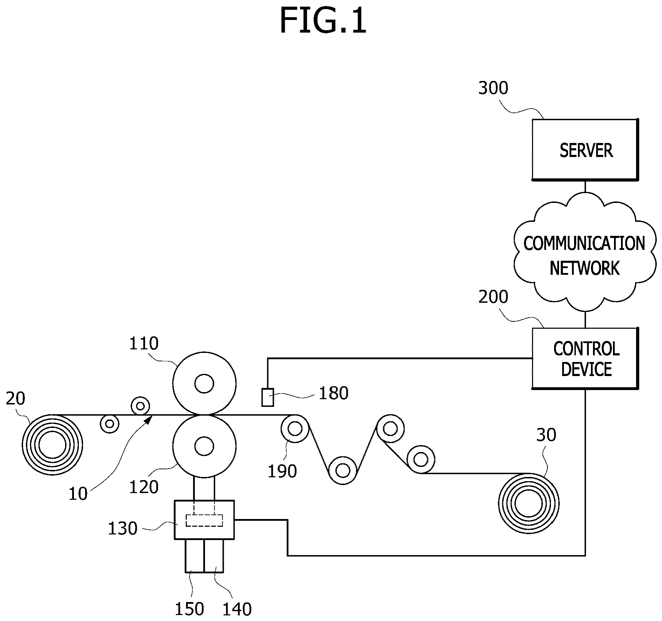

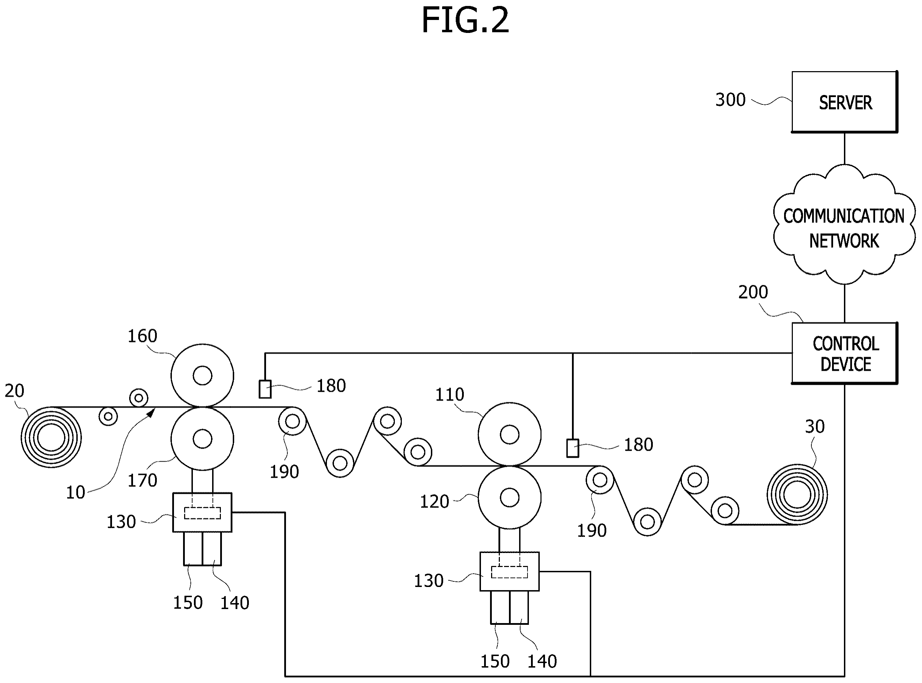

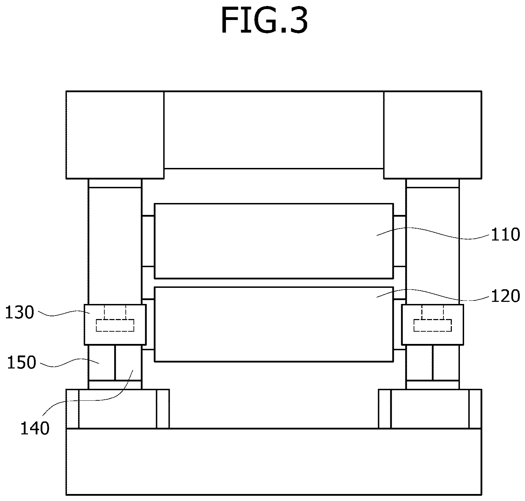

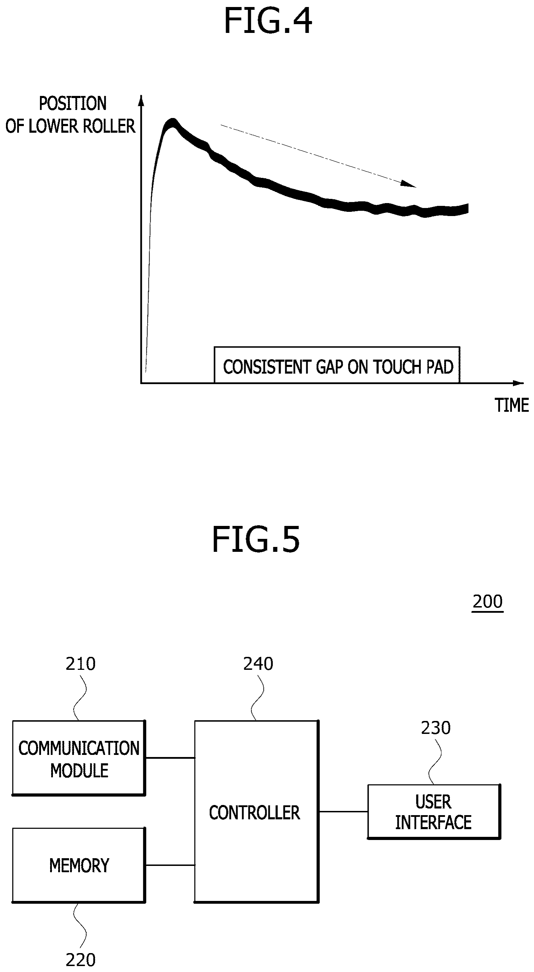

FIGS. 1 and 2 are conceptual views of a rolling apparatus for manufacturing an electrode according to an embodiment of the present disclosure. FIG. 3 is a view of a second roller position adjustment unit according to an embodiment of the present disclosure. FIG. 4 is an exemplary graph for describing a change in position of a second roller when the rolling apparatus is stopped according to an embodiment of the present disclosure.

Referring to FIGS. 1 and 2, the rolling apparatus for manufacturing the electrode according to an embodiment of the present disclosure may include one or more pairs of rollers 110, 120, 160, and 170, a second roller position adjustment unit 130, 140, and 150, a thickness sensor 180, and a control device 200.

In FIG. 1, the rolling apparatus is illustrated as including a pair of rollers 110 and 120. The first roller 110 presses the electrode 10 from above and a second roller 120 that presses the electrode 10 from below.

In FIG. 2, the rolling apparatus is illustrated as including two pairs of rollers: 110, 120, 160, and 170. Rollers positioned at an upper part may be defined as first-stage rollers 110 and 120, and rollers positioned at a lower part may be defined as second-stage rollers 160 and 170. The first-stage rollers 110 and 120 and the second-stage rollers 160 and 170 may include first rollers 110 and 160 that press an electrode 10 from above and second rollers 120 and 170 that presses the electrode 10 from below. When the electrode 10 is put into the rolling apparatus, the first rollers 110 and 120 and the second rollers 160 and 170 may each rotate to roll the electrode 10. As the rolling apparatus includes two pairs of rollers 110, 120, 160, and 170, a rolling process occurs twice. Since the first-stage rollers 110 and 120 and the second-stage rollers 160 and 170 perform the same operation as the pair of rollers 110 and 120 shown in FIG. 1, the following description will be made with reference to FIG. 1 for convenience.

The electrode 10 provided from an unwinder 20 is rolled by passing between the first roller 110 and the second roller 120 and is wound by a winder 30 after passing through transport components 190, thereby completing the manufacturing of the electrode 10. Here, the electrode 10 may be a sheet-shaped electrode (or electrode plate) and may be a secondary battery electrode in which an electrode assembly coating layer including an electrode active material, a binder, a conductive material, and a filler is formed on one or both surfaces of a current collector.

The first roller 110 and the second roller 120 face each other, and the positioning of the second roller 120 defines a rolling gap through which the electrode 10 passes between the second roller 120 and the first roller 110. Here, the first roller 110 may be a roller positioned at an upper side, and the second roller 120 may be a roller positioned at a lower side of the first roller 110. The first roller 110 and the second roller 120 are vertically disposed to provide a rolling gap.

The first roller 110 may be formed in a cylindrical shape with an axis in a longitudinal direction and may be rotated around a first rotation axis. The second roller 120 may be provided to face the first roller 110, may be formed in a cylindrical shape with an axis in a longitudinal direction, and may be rotated around a second rotation axis while forming a rolling gap through which the electrode 10 passes between the second roller 120 and the first roller 110.

The first roller 110 and the second roller 120 may be spaced a predetermined distance apart from each other. The first roller 110 may be installed at a fixed position, and the second roller 120 may be installed to be position-movable, thereby adjusting a distance between the first roller 110 and the second roller 120 according to a thickness, a material, etc. of a target to be rolled (that is, the electrode 10).

The second roller 120 may be in close contact with the electrode 10 while performing rolling together with the first roller 110 to planarize an active material applied on the electrode 10. The first roller 110 and the second roller 120 may rotate at a specified rotation speed to compress and roll the electrode 10 passing through the rolling gap.

The second roller position adjustment units 130, 140, and 150 are components for adjusting a position of the second roller 120 and may include a hydraulic cylinder. In particular, as shown in FIG. 3, the second roller position adjustment units 130, 140, and 150 may include a driving unit 130, a position sensor 140, and a control valve 150 to be operated in a hydraulic manner.

The driving unit 130 may be directly or indirectly connected to the second roller 120 to adjust the position of the second roller 120. The driving unit 130 may be a hydraulic cylinder that vertically moves piston between heights and may be controlled by the control device 200. The driving unit 130 may implement the vertical movement of the second roller 120 by adjusting pressure of a hydraulic cylinder. Alternatively, the driving unit 130 may consist of a shaft or screw coupled to the second roller 120, may further include an adjustment motor (not shown), and may further include a gear to perform rotation movement. However, a configuration of the driving unit 130 and an adjustment method of the second roller 120 are not limited to these examples, and various configurations may be applied.

The driving unit 130 may adjust the rolling gap between the first roller 110 and the second roller 120 by the adjustment motor or the like. For example, the driving unit 130 may adjust the rolling gap by adjusting the position of the second roller 120 in a vertical direction (for example, a Y-axis direction).

The position sensor 140 may sense the position of the second roller 120 or the driving unit 130 and may measure the position of the second roller 120 or the driving unit 130 based on a preset value according to a thickness of the electrode 10 on which an active material is applied. The position sensor 140 may be implemented in various ways, such as infrared and scale methods.

The control valve 150 may receive the position of the second roller 120 or the driving unit 130 from the position sensor 140. The control device 200 may control the control valve to control the operation of the driving unit 130 and thereby adjust the position of the second roller 120.

The control valve 150 may include a pressure control valve (not shown) and a servo valve. A fluid, which is generated from a hydraulic pressure generation device (not shown) to pass through the pressure control valve, enables the lifting or lowering of the driving unit 130 by the servo valve 150 through hydraulic pressure of the fluid. An operating position of the driving unit 130 may be sensed by the position sensor 140, and the control device 200 that receives the sensed operating position controls the servo valve 150 may thereby control the position of the second roller 120 in real time.

Although only the second roller position adjustment units 130, 140, and 150 for the second roller 120 are illustrated and described in the present embodiment, the present disclosure is not limited thereto. For example, a position adjustment unit may be connected only to the first roller 110. In another example, the position adjustment unit may be separately connected to both the first roller 110 and the second roller 120 to control the first roller 110 and the second roller 120, thereby adjusting the rolling gap.

The first roller 110 or the second roller 120 may be connected to a connection member (not shown) extending from each side thereof, and the connection member may be coupled to a back pressure cylinder (not shown). The back pressure cylinder may have a hydraulic cylinder structure and may be vertically controlled to eliminate a thickness deviation in a lateral direction (width direction) of the electrode 10 passing through the rolling gap.

The thickness sensor 180 may measure a thickness of the electrode 10 that is being rolled while passing between the first roller 110 and the second roller 120. The thickness sensor 180 may transmit information on the thickness of the measured electrode 10 to the control device 200.

The thickness sensor 180 may calculate the thickness of the electrode 10 through a change in position of the second roller 120, may directly detect the thickness of the electrode 10 passing through the rolling apparatus, or may calculate the thickness by detecting the rolling gap. The information on the thickness obtained in this way may be transmitted to the control device 200. FIGS. 1 and 2 exemplarily illustrate a position of the thickness sensor 180, and the present disclosure is not limited to the illustrated configuration.

The rolling apparatus for manufacturing an electrode further includes a transport component 190 for transporting the electrode 10. The transport component 190 may include a plurality of transport rollers as shown in FIGS. 1 and 2. FIGS. 1 and 2 exemplarily illustrate the transport component 190, but the present disclosure is not limited to what has been illustrated.

The control device 200 may control the rolling gap through which the electrode 10 passes between the first roller 110 and the second roller 120. The control device 200 may control the rolling gap by controlling the position of the second roller 120 through the servo valve 150 and the driving unit 130 for the second roller 120. When the electrode 10 is rolled using the rolling apparatus configured as described above, the second roller 120 positioned below the first roller 110 is adjusted by the servo valve 150 to roll the electrode 10, and a rolling amount may be determined according to a rolling gap value between the first roller 110 and the second roller 120.

When the rolling apparatus is stopped, the same gap value may be output on a user interface 230 of the control device 200, but an actual position of the second roller 120 may have shifted over time. That is, since the first roller 110 has a fixed structure, its position is fixed. But since the second roller 120 has a structure that moves vertically, the second roller 120 is lowered over time as shown in FIG. 4. The lowering of the second roller 120 causes the rolling gap to increase. Accordingly, a gap correction amount is required for the rolling apparatus.

Conventionally, a rolling gap has been adjusted manually based on an experience of an engineer. But such a manual adjustment may cause a deviation in the quality of an electrode based on the experience of the engineer. This may result in a lifespan of a secondary battery being reduced and/or defects being formed in the secondary battery. Thus, there is a need for a technology capable of minimizing a quality deviation of the electrode by automatically inputting a rolling gap value between the first roller and the second roller when an electrode is rolled.

According to the present disclosure quality deviation is minimized in a rolling process of the electrode 10 by generating a gap prediction model capable of automatically predicting a rolling gap value and automatically predicting an optimal rolling gap value using the generated gap prediction model.

To this end, the rolling apparatus according to the present disclosure may include a server 300 that collects rolling process data generates a gap prediction model using the collected data. The server 300 may collect process-related data including at least one of rolling process data, standard data, and derived data, and the server 300 may generate a gap prediction model using the collected process-related data.

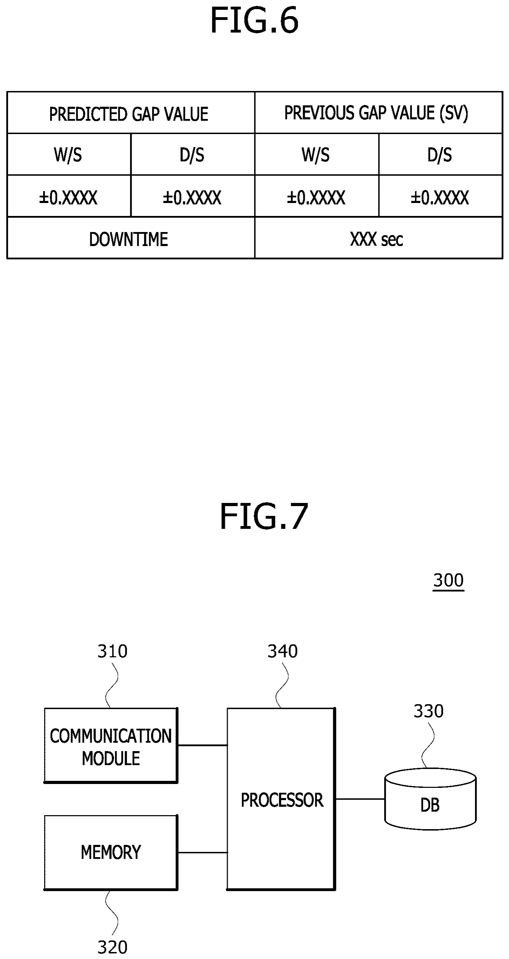

The server 300 may distribute the gap prediction model to the control device 200. The server 300 may be implemented as an edge server or a cloud server. The server 300 will be described in detail with reference to FIG. 7.

In embodiments, the control device 200 may predict a rolling gap value using the gap prediction model and may control the position of the second roller 120 using the predicted rolling gap value, thereby controlling the rolling gap between the first roller 110 and the second roller 120. For example, the control device 200 may control the second roller position adjustment units 130, 140, and 150 to adjust the position of the second roller 120 such that the rolling gap between the first roller 110 and the second roller 120 becomes the predicted rolling gap value. The control device 200 will be described in detail with reference to FIG. 5.

In the above-described embodiment, the server 300 generates the gap prediction model and the control device 200 predicts the rolling gap value using the gap prediction model. But, in other embodiments, the server 300 that generates the gap prediction model and the control device 200 that predicts the rolling gap value may also be implemented as one device.

FIG. 5 is a schematic block diagram illustrating a configuration of the control device according to an embodiment of the present disclosure. FIG. 6 is an exemplary diagram for describing a rolling gap display screen according to one embodiment of the present disclosure.

Referring to FIG. 5, the control device 200 according to an embodiment of the present disclosure may include a communication module 210, a memory 220, a user interface 230, and a controller 240.

The communication module 210 may provide a communication interface for providing a transmission signal or a reception signal in the form of packet data between external devices (for example, the second roller position adjustment units 130, 140, and 150, the servo valve 150, and the server 300) in conjunction with a communication network. Further, the communication module 210 may transmit a position adjustment signal to the second roller position adjustment units 130, 140, and 150 and may receive information about a thickness of the electrode 10 from the thickness sensor 180. In addition, the communication module 210 may include hardware and software necessary to transmit or receive a signal such as a control signal or a data signal through a wired or wireless connection with other network devices. The communication module 210 may be implemented in various forms such as a short-distance communication module, a wireless communication module, a mobile communication module, and a wired communication module.

The memory 220 stores pieces of data related to the operation of the control device 200. In particular, a gap prediction model that enables a rolling gap value to be predicted may be stored in the memory 220, and pieces of stored information may be selected by the controller 240 as needed. In addition, the memory 220 stores various types of data generated during the execution of an operating system or program (application or applet) for driving the control device 200. In this case, the memory 220 is a general name for a non-volatile storage device, which continues to maintain stored information even when power is not supplied, and a volatile storage device which requires power to maintain the stored information. In addition, the memory 220 may perform a function of temporarily or permanently storing data processed by the controller 240. Here, the memory 220 may include a magnetic storage media or a flash storage media in addition to a volatile storage device that requires power to maintain stored information. But the present disclosure is not limited to these examples.

The user interface 230 may receive an instruction from a user or output a result according to the instruction from the user. The user interface 230 may be implemented as, for example, a button, a touch panel, a touch pad, a thin film transistor-liquid crystal display (TFT-LCD) panel, a light-emitting diode (LED) panel, an organic LED (OLED) panel, an active matrix OLED (AMOLED) panel, a flexible panel, etc.

When a user inputs a condition deduction instruction through the user interface 230, the user interface 230 may output a rolling gap display screen including at least one of a downtime, a predicted gap value, and a previous gap value under the control of the controller 240. Here, the predicted gap value may be a rolling gap value predicted by a gap prediction model and may include a work-side (W/S) predicted gap value and a drive-side (D/S) predicted gap value. The previous gap value may be a rolling gap value used during operation immediately before the present time and may include a previous W/S gap value and a previous D/S gap value. As shown in FIG. 6, the rolling gap display screen may display the predicted gap value including the W/S predicted gap value and the D/S predicted gap value, the previous gap value including the W/S previous gap value and the D/S previous gap value, and a downtime. The user interface 230 may output both the previous gap value and the predicted gap value so that a user can easily check how much gap correction has been performed.

The controller 240 may be configured to control the overall operation of the control device 200. For example, the controller 240 may execute software (for example, a program) stored in the memory 220 to control components connected to the controller 240 (for example, at least one component among the communication module 210, the memory 220, and the user interface 230). The controller 240 may be implemented as an application specific integrated circuit (ASIC), a digital signal processor (DSP), a programmable logic device (PLD), a field programmable gate array (FPGA), a central processing unit (CPU), and/or a microcontroller. But the present disclosure is not limited to these examples.

When a condition deduction instruction is input through the user interface 230, the controller 240 may predict a rolling gap value by inputting the downtime and the previous gap value into the gap prediction model. When the rolling apparatus is stopped the position of the second roller 120 may change over time such that the rolling gap becomes different according to the downtime of the rolling apparatus. Thus, a rolling gap correction amount may be different, and the downtime may be an important variable in the gap prediction model. Since the previous gap value is a value required for calculating the rolling gap correction amount, the previous gap value also may be an important variable in the gap prediction model. Therefore, the gap prediction model may use the downtime and the previous gap value as input variables and may output the predicted gap value.

The downtime may be a difference between an end point of a rolling process and a start point of the rolling process. That is, a process end point (RollUp) and a process start point (RollDown) occur for roll replacement between each task, and the downtime may be a difference between a process end point and a process start point. In other words, the downtime may be a difference between a starting point time of a current roll rolling process and an ending point time of a previous roll rolling process.

The previous gap value may be a rolling gap value at an end point of a previous roll rolling process. The previous gap value may include a W/S previous gap value and a D/S previous gap value. Here, W/S and D/S refer to sides of the electrode 10 mounted on the unwinder 20. That is, the electrode is divided into a certain number of zones in a length direction for a rolling process, with the zones close to a worker being defined as W/Ss, and the remaining zones being defined as D/Ss. For example, when a 1,000 m electrode 10 is divided into 10 equal parts, zone 1 may be in a range of 1 m to 100 m, zone 2 may be in a range of 101 m to 200 m, zone 3 may be in a range of 201 m to 300 m, zone 4 may be in a range of 301 m to 400 m, zone 5 may be in a range of 401 m to 500 m, zone 6 may be in a range of 501 m to 600 m, zone 7 may be in a range of 601 m to 700 m, zone 8 may be in a range of 701 m to 800 m, zone 9 may be in a range of 801 m to 900 m, and zone 10 may be in a range of 901 m to 1,000 m. In this case, zones 1 to 5 are W/Ss, and zones 6 to 10 are D/Ss.

When a condition deduction instruction is input, the controller 240 may acquire the rolling apparatus downtime and a previous gap value of the rolling apparatus, and the controller 240 may input the acquired downtime and previous gap value into the gap prediction model. For example, the controller 240 may acquire a difference between a starting point time of a current roll rolling process and an ending point time of a previous roll rolling process as the downtime.

When the downtime and the previous gap value are input into the gap prediction model, the controller 240 may predict a rolling gap value. Hereinafter, for convenience, the predicted rolling gap value will be described by being referred to as a predicted gap value. The predicted gap value may include a W/S predicted gap value and a D/S predicted gap value.

When the rolling apparatus is implemented with two stage rollers, the previous gap value may include a W/S previous gap value and D/S previous gap value of a first-stage roller and a W/S previous gap value and D/S previous gap value of a second-stage roller. In this case, the downtime and the previous gap value may be input into the gap prediction model, and the controller 240 may predict a predicted gap value including a W/S predicted gap value and D/S predicted gap value of the first-stage roller and a W/S predicted gap value and D/S predicted gap value of the second-stage roller.

After acquiring the predicted gap values, the controller 240 may control the position of the second roller 120. In particular, the controller 240 may control the servo valve 150 of the second roller position adjustment units 130, 140, and 150 such that a rolling gap becomes the predicted gap value. That is, the controller 240 may control the driving of the servo valve 150 and the driving unit 130 to adjust the position of the second roller 120 such that the second roller 120 is moved to a position corresponding to the predicted gap value. In other words, the controller 240 may control the servo valve 150 according to the predicted gap value to drive the driving unit 130 so that the position of the second roller 120 is adjusted, thereby controlling a rolling gap between the first roller 110 and the second roller 120.

In this way, the controller 240 may control the rolling gap through which the electrode 10 passes between the first roller 110 and the second roller 120. That is, the controller 240 may control the second roller position adjustment units 130, 140, and 150 according to the predicted gap value to adjust the position of the second roller 120, thereby forming a rolling gap corresponding to the predicted gap value.

After the position of the second roller 120 is adjusted and the rolling apparatus operates, a thickness of an electrode may be determined by the thickness sensor 160. When the thickness of the electrode is within a preset reference thickness range, the controller 240 may operate such that a rolling process is continuously performed. When the thickness measurement value of the electrode deviates from the reference thickness range, the controller 240 may additionally adjust the rolling gap. In this case, the rolling gap may be adjusted manually.

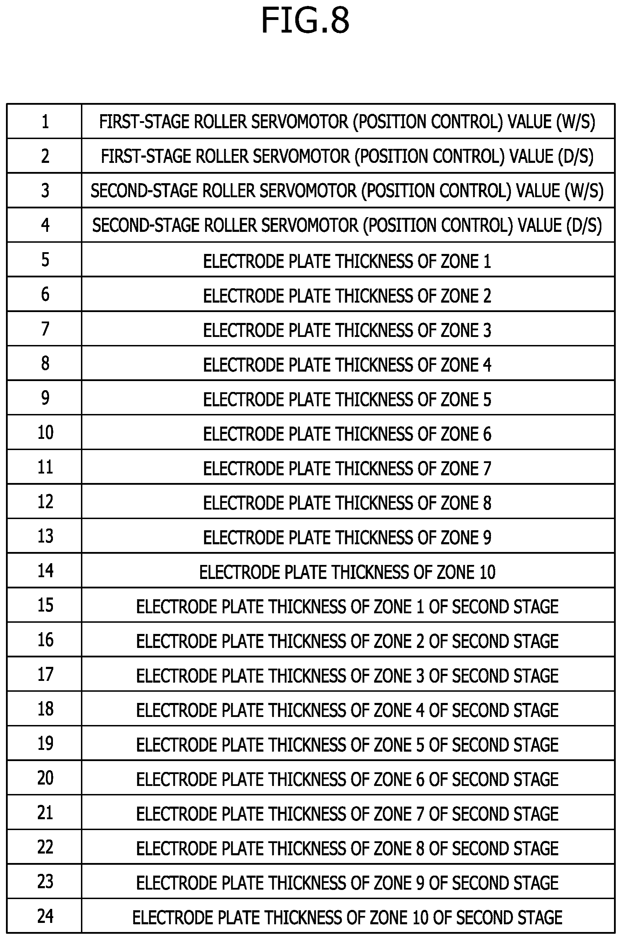

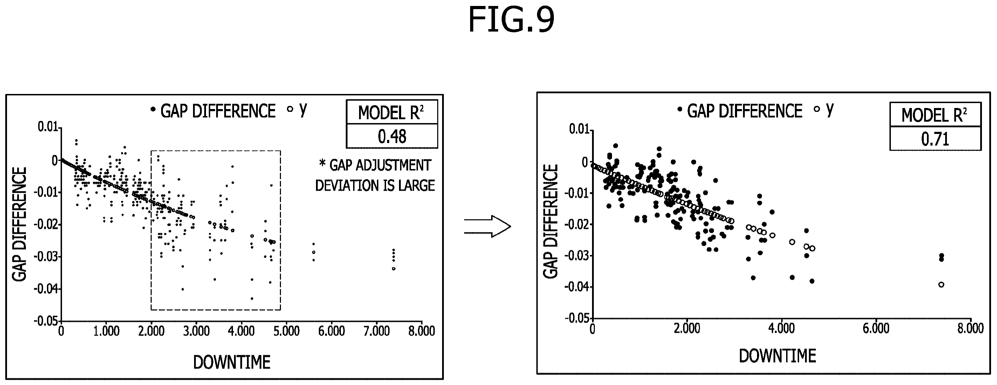

FIG. 7 is a schematic block diagram illustrating a configuration of the server according to an embodiment of the present disclosure., FIG. 8 is an exemplary diagram for describing factors necessary for modeling a gap prediction model according to an embodiment of the present disclosure. FIG. 9 shows exemplary graphs for describing a gap adjustment deviation according to an embodiment of the present disclosure.

Referring to FIG. 7, the server 300 according to an embodiment of the present disclosure may include a communication module 310, a memory 320, a database 330, and a processor 340.

The communication module 310 may provide a communication interface necessary to provide a transmission signal or a reception signal in the form of packet data between the server 300 and an external device (for example, the control device 200) in conjunction with a communication network. Further, the communication module 310 may collect process-related data from the control device 200 and may send a gap prediction model to the control device 200. The communication module 310 may include hardware and software necessary to transmit or receive a signal such as a control signal or a data signal through a wired or wireless connection with other network devices. The communication module 310 may be implemented in various forms such as a short-distance communication module, a wireless communication module, a mobile communication module, and a wired communication module.

The memory 320 stores data related to the operation of the server 300. In particular, the memory 320 may store a program (application or applet) capable of collecting process-related data from a plurality of control devices 200 and a program (application or applet) capable of generating a gap prediction model using the process-related data. The stored information may be selected by the processor 340 as needed. In addition, the memory 320 stores various types of data generated during the execution of an operating system or program (application or applet) for driving the server 300. In this case, the memory 320 is a general name for a non-volatile storage device, which continues to maintain stored information even when power is not supplied, and a volatile storage device which requires power to maintain the stored information. In addition, the memory 320 may perform a function of temporarily or permanently storing data processed by the processor 340. Here, the memory 320 may include a magnetic storage media or a flash storage media in addition to a volatile storage device that requires power to maintain stored information. But the present disclosure is not limited to these examples.

The database 330 may store process-related data collected through the communication module 310. Here, the process-related data may include at least one of process data, standard data, and derived data.

The processor 340 may be configured to control the overall operation of the server 300. For example, the processor 340 may execute software (for example, a program) stored in the memory 320 to control components connected to the processor 340 (for example, at least one of the communication module 310, the memory 320, and the database 330). The processor 340 may be implemented as an ASIC, a DSP, a PLD, an FPGA, a CPU, and/or a microcontroller. But the present disclosure is not limited to these examples.

The processor 340 may collect process-related data including at least one of process data for a past set time, standard data, and derived data. The processor 340 may generate a gap prediction model using the collected process-related data.

Hereinafter, a method in which the processor 340 generates a rolling gap prediction model will be described.

The processor 340 may collect process data for a past set time, standard data, and derived data from the control device 200. Here, the process data may be data of a rolling process for a past set time and may include thickness of the electrode 10 (electrode plate), temperature, speed, length, pressure, back pressure, load, tension, roll rotation speed, etc. The standard data may include a center value (e.g., average) of the electrode thickness, an upper limit of the electrode thickness, and a lower limit of the electrode thickness. The derived data may be data derived from the process data and the standard data and may include, for example, a downtime.

When the process-related data including at least one of the process data, the standard data, and the derived data is collected, the processor 340 may perform preprocessing on the process-related data. Here, the preprocessing may include data merging, duplicate time processing, data ordering, missing value processing, outlier processing, etc.

The processor 340 may select factors necessary for modeling by analyzing a correlation between the preprocessed process-related data and the electrode thickness. For example, by using a y factor as the electrode thickness and using an x factor as a remainder excluding the electrode thickness from the process-related data, the processor 340 may select a certain number of factors in order of greatest influence on the electrode thickness. In other words, by using the electrode thickness as an output characteristic and using the remaining data (excluding the electrode thickness) from the process-related data as input characteristics, the processor 340 may select factors necessary for modeling by analyzing a correlation between the input characteristic and the output characteristics. The processor 340 may generate an input characteristic, in which a correlation between the input characteristic and the output characteristics is greater than a preset value, as a learning data set. In this case, the processor 340 may analyze the correlation between the input characteristic and the output characteristics using a feature importance technique. The feature importance technique may be a measurement indicating how much influence a corresponding feature has on dividing classes when a node is branched in a decision tree.

For example, the processor 340 may select factors from among 302 rolling process factors through correlation analysis, such as the 24 factors shown in FIG. 8. The 24 factors may include a first-stage roller position control value (W/S), a first-stage roller position control value (D/S), a second-stage roller position control value (W/S), a second-stage roller position control value (D/S), an electrode plate thickness of zone 1 of the first-stage roller, an electrode plate thickness of zone 2 of the first-stage roller, an electrode plate thickness of zone 3 of the first-stage roller, an electrode plate thickness of zone 4 of the first-stage roller, an electrode plate thickness of zone 5 of the first-stage roller, an electrode plate thickness of zone 6 of the first-stage roller, an electrode plate thickness of zone 7 of the first-stage roller, an electrode plate thickness of zone 8 of the first-stage roller, an electrode plate thickness of zone 9 of the first-stage roller, an electrode plate thickness of zone 10 of the first-stage roller, an electrode plate thickness of zone 1 of the second-stage roller, an electrode plate thickness of zone 2 of the second-stage roller, an electrode plate thickness of zone 3 of the second-stage roller, an electrode plate thickness of zone 4 of the second-stage roller, an electrode plate thickness of zone 5 of the second-stage roller, an electrode plate thickness of zone 6 of the second-stage roller, an electrode plate thickness of zone 7 of the second-stage roller, an electrode plate thickness of zone 8 of the second-stage roller, an electrode plate thickness of zone 9 of the second-stage roller, and an electrode plate thickness of zone 10 of the second-stage roller.

Because input variables of the gap prediction model include a downtime and a previous gap value, it is possible to derive the downtime and the previous gap value through selected factors. The previous gap value may be derived using the first-stage roller position control value (W/S), the first-stage roller position control value (D/S), the second-stage roller position control value (W/S), and the second-stage roller position control value (D/S). The downtime may be an interval between a time at which a final thickness is measured in a first lot and a time at which a first thickness is measured in a second lot. Therefore, a factor necessary to derive the downtime may be a time at which a thickness of the electrode 10 is measured, and the time at which the thickness of the electrode 10 is measured may be derived based on an electrode thickness after performing rolling. Accordingly, the downtime may be derived based on the plate thicknesses of zones 1 to 10 of the first-stage roller and the plate thicknesses of zones 1 to 10 of the second-stage roller.

The processor 340 may predict a rolling gap value by applying the selected factors to each of a plurality of machine learning models. Here, the machine learning model may be a regression model. For example, the machine learning models may include exponential regression, multiple linear regression (MLR), deep learning, genetic algorithm (GA), boosted trees, generative adversarial network (GAN), artificial neural network (ANN), ensemble, etc.

When the rolling gap value of each machine learning model is predicted, the processor 340 may evaluate the performance of each machine learning model based on the predicted rolling gap value. That is, the processor 340 may evaluate the performance of each machine learning model using a performance evaluation index based on a difference between the rolling gap value predicted through each machine learning model and an actual rolling gap value. Here, the performance evaluation index may include mean absolute error (MAE), mean squared error (MSE), root mean squared error (RMSE), mean squared log error (MSLE), root mean squared log error (RMSL), coefficient of determination (R2-Score), etc. The lower a value of the MAE, MSE, RMSE, MSLE, and RMSLE, the greater the regression performance. The higher a value of the coefficient of determination (R2-Score), the greater the regression performance.

When the performance of each machine learning model is evaluated, the processor 340 may select an optimal machine learning model based on the performance of each machine learning model. In this case, the processor 340 may select the machine learning model with the best performance as the optimal machine learning model.

In a specific example, the processor 340 may generate a gap prediction model by using an exponential function-based regression equation using factors, which are selected from process-related data for a past set period (for example, 3 to 6 months from the present time), as inputs and using a rolling gap value as an output. In this case, the processor 340 may generate an exponential regression model. As a result of analyzing the process-related data, since a gap adjustment value (that is, a difference between a predicted gap value and a previous gap value) does not increase indefinitely as a downtime increases, the exponential regression model may be used.

A range of parameters applied to the exponential regression equation may be specified by a user, and an optimal value of each parameter may be calculated using a grid search technique. Here, grid search may be a method of systematically trying combinations of various hyperparameters to optimize the performance of a model. The processor 340 may perform parameter optimization by inputting parameters derived through the grid search into the exponential regression equation and calculating an error (MAE) between a predicted gap value predicted through the exponential regression equation and an actual gap value.

The processor 340 may perform process capability index (Cpk) data preprocessing when a gap prediction model is learning. The Cpk data preprocessing may be performed during a learning process and may refer to calculating initial thickness process capability for each lot among all lots in a learning period before performing learning and then removing a lot of which process capability is less than or equal to a reference value (for example, 1.5) to subsequently perform learning. Low process capability means that a thickness deviation is high. When a lot with a high thickness deviation is learned, since there is a high possibility that prediction performance will be low, a lot with low process capability is removed.

When the Cpk data preprocessing is performed, it can be confirmed that a gap adjustment deviation is decreased in the gap prediction model as shown in FIG. 9.

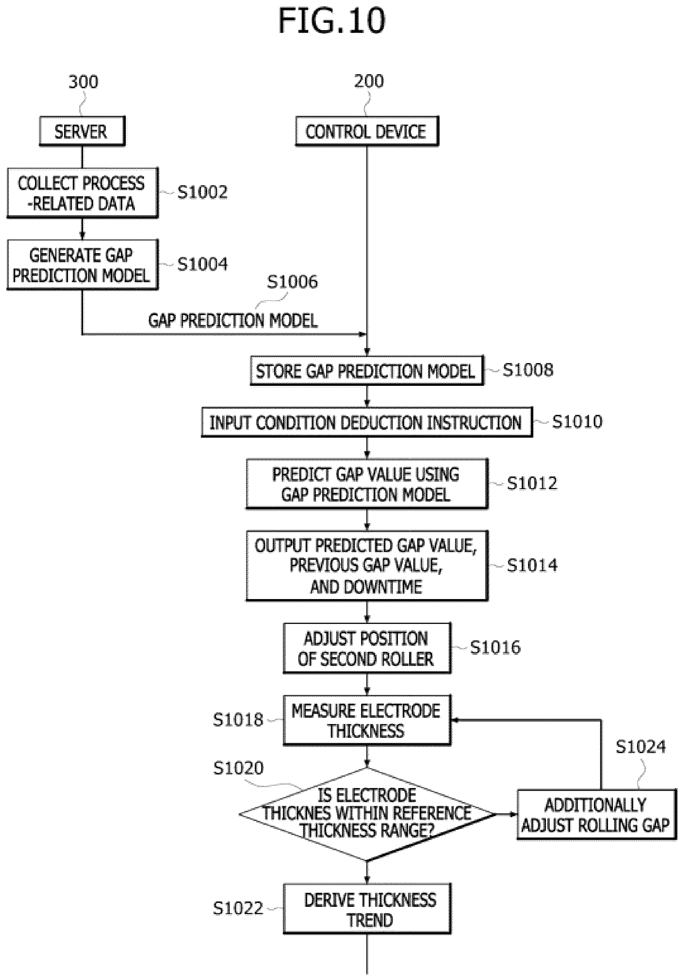

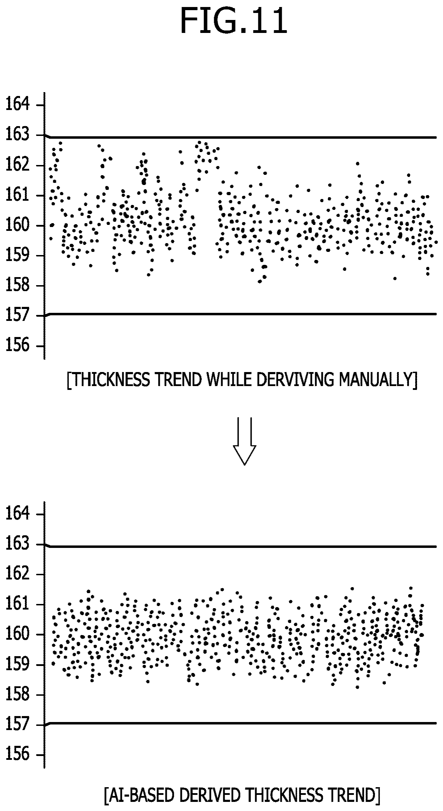

FIG. 10 is a flowchart for describing a method of operating a rolling apparatus for manufacturing an electrode according to an embodiment of the present disclosure. FIG. 11 shows exemplary graphs for describing a thickness trend of an electrode according to an embodiment of the present disclosure.

Referring to FIG. 10, the server 300 collects process-related data including process data for a past set time, standard data, and derived data (S1002). Here, the process data may be data according to a rolling process for a past set time and may include thickness of an electrode plate, temperature, speed, length, pressure, back pressure, load, tension, roll rotation speed, etc. The standard data may include a center value (e.g., average) of an electrode plate thickness, an upper limit of the electrode plate thickness, and a lower limit of the electrode plate thickness. The derived data may be data derived from the process data and the standard data and may include, for example, a downtime.

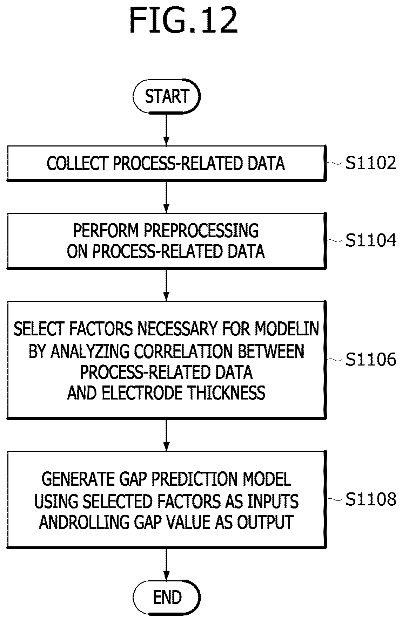

When operation S1002 is performed, the server 300 generates a gap prediction model using the process-related data (S1004). A method by which the server 300 generates the gap prediction model will be described with reference to FIG. 12.

When operation S1004 is performed, the server 300 transmits the gap prediction model to the control device 200 (S1006), and the control device 200 stores the gap prediction model (S1008).

After operation S1008 is performed, when a condition deduction instruction is input (S1010), the control device 200 predicts a rolling gap value using the gap prediction model (S1012). Therefore, when the condition deduction instruction is input, the control device 200 may acquire a downtime and a previous gap value of the rolling apparatus and may input the acquired downtime and the previous gap value into the gap prediction model. In this case, the control device 200 may acquire a difference between a starting time of a current roll rolling process and an ending time of a previous roll rolling process as the downtime.

After operation S1012 is performed, the control device 200 outputs the predicted gap value, the previous gap value, and the downtime through the user interface 230 (S1014) and controls the servo valve 150 of the second roller position adjustment units 130, 140, and 150 such that a rolling gap between the first roller 110 and the second roller 120 becomes the predicted gap value. The control device 200 thereby adjusts a position of the second roller 120 (S1016). The control device 200 may control the servo valve 150 according to the predicted gap value to adjust the position of the second roller 120, thereby controlling a gap between the first roller 110 and the second roller 120.

After operation S1016 is performed, the control device 200 measures a thickness of a rolled first electrode using the thickness sensor 180 (S1018) and determines whether the measured thickness of the first electrode is within a preset reference thickness range (S1020).

When the thickness of the first electrode is within the reference thickness range as a determination result in operation S1020, the control device 200 derives a thickness trend of the electrode 10 (S1022). As shown in FIG. 11, when the rolling gap is adjusted using the gap prediction model, it can be seen that a thickness of the electrode 10 is more uniform as compared to when a rolling gap is manually adjusted.

When the thickness of the first plate deviates from the reference thickness range as a determination result in operation S1020, the control device 200 additionally adjusts the rolling gap (S1024) and performs operation S1018.

FIG. 12 is a flowchart for describing a method of generating a gap prediction model according to an embodiment of the present disclosure.

Referring to FIG. 12, the server 300 collects process-related data including process data, standard data, and derived data for a past set time (S1002).

When operation S1102 is performed, the server 300 performs preprocessing on the process-related data (S1104). Here, the preprocessing may include data merging, duplicate time processing, data ordering, missing value processing, outlier processing, etc.

When operation S1104 is performed, the server 300 selects factors necessary for modeling by analyzing a correlation between the preprocessed process-related data and an electrode thickness (S1106).

The processor 340 may select factors necessary for modeling by analyzing a process influence and a correlation between factors. That is, by using the electrode thickness as an output characteristic and using the remaining data excluding the electrode thickness from the process-related data as input characteristics, the processor 340 may select factors necessary for modeling by analyzing a correlation between the input characteristic and the output characteristics. In this case, the processor 340 may analyze the correlation between the input characteristic and the output characteristics using a feature importance technique. For example, by using a y factor as the electrode thickness and using an x factor as a remainder excluding the electrode thickness from the process-related data, the processor 340 may select a certain number of factors in an order of greatest influence on the electrode thickness.

After operation S1106 is performed, the server 300 generates a gap prediction model using the selected factors as inputs and using the rolling gap value as an output (S1108). In this case, the server 300 may generate the gap prediction model using an exponential function-based regression equation that uses the factors selected from the process-related data as inputs and output the rolling gap value.

According to the present disclosure, a gap prediction model capable of predicting a rolling gap value is generated, and an optimal rolling gap value is predicted using the generated gap prediction model. It is thereby possible to minimize quality deviation in an electrode rolling process.

The embodiments described herein may be implemented, for example, as a method or process, a device, a software program, a data stream, or a signal. Although discussed in the context of a single type of implementation (for example, discussed only as a method), features discussed herein may also be implemented in other forms (for example, a device or a program). The device may be implemented by suitable hardware, software, firmware, and the like. The method may be implemented on a device, such as a processor that generally refers to a processing device including a computer, a microprocessor, an integrated circuit, a programmable logic device, etc. The processor may include a communication device such as a computer, a cell phone, a personal digital assistant (PDA), and other devices that facilitate communication of information between the device and end-users.

Although the present disclosure has been described with reference to embodiments and drawings illustrating aspects thereof, the present disclosure is not limited thereto. Various modifications and variations can be made by a person skilled in the art to which the present disclosure belongs within the scope of the technical spirit of the present disclosure.

## Claims

1. A rolling apparatus for manufacturing an electrode (10), the rolling apparatus comprising:
a rolling unit including a first roller (110) and a second roller (120) configured to form a rolling gap through which an electrode (10) passes between the first roller (110) and the second roller (120);
a roller position adjustment unit (130, 140, 150) configured to adjust a position of the second roller (120); and
a control device (200) configured to predict a rolling gap value using a gap prediction model and control the roller position adjustment unit (130, 140, 150) such that the rolling gap approaches and preferably becomes the predicted rolling gap value.

2. The rolling apparatus of claim 1, wherein the roller position adjustment unit (130, 140, 150) includes:
a driving unit (130) connected to the second roller (120); and
a control valve (150) configured to receive the predicted rolling gap value from the control device (200) and control the driving unit (130) to adjust the position of the second roller (120) such that the rolling gap approaches and preferably becomes the predicted rolling gap value.

3. The rolling apparatus according to any of the previous claims, further comprising a user interface (230),
wherein, when a condition deduction instruction is input through the user interface (230), the control device (200) inputs a downtime and a previous gap value into the gap prediction model to predict the rolling gap value.

4. The rolling apparatus according to any of the previous claims, further comprising a thickness sensor (180) configured to measure a thickness of the electrode (10) that has passed between the first roller (110) and the second roller (120).

5. The rolling apparatus of claim 4, wherein the control device (200) compares a thickness of the electrode (10) measured by the thickness sensor (180) with a preset reference thickness range and adjusts the rolling gap when the thickness of the electrode (10) is out of the reference thickness range.

6. The rolling apparatus according to any of the previous claims, further comprising a server (300) configured to collect process-related data including at least one of process data for a past set time, standard data, and derived data, and the server being configured to generate the gap prediction model using the collected process-related data.

7. The rolling apparatus of claim 6, wherein, by using the process-related data as an input characteristic and an electrode thickness as an output characteristic, the server (300) selects factors necessary for modeling by analyzing a correlation between the input characteristic and the output characteristic, applies the selected factors to each of a plurality of machine learning models to predict the rolling gap value, evaluates performance of each machine learning model based on the predicted rolling gap value, selects one of the machine learning models based on the performance of each machine learning model, and provides the selected machine learning model as the gap prediction model.

8. The rolling apparatus of claim 7, wherein the server (300) generates the gap prediction model using an exponential function-based regression equation that uses the selected factors as inputs and outputs the rolling gap value.

9. A method of operating a rolling apparatus for manufacturing an electrode (10), the rolling apparatus including a first roller (110) and a second roller (120) that form a rolling gap through which the electrode (10) passes, a control device (200) for controlling a roller position adjustment unit (130, 140, 150) that adjusts a position of the second roller (120), the rolling apparatus being preferably configured according to any of the previous claims, the method comprising:
predicting a rolling gap value using a gap prediction model; and
controlling the roller position adjustment unit (130, 140, 150) to adjust a position of the second roller (120) such that the rolling gap approaches and preferably becomes the predicted rolling gap value.

10. The method of claim 9, wherein in the predicting of the rolling gap value, when a condition deduction instruction is input through a user interface (230) of the rolling apparatus, the control device (200) inputs a downtime and a previous gap value into the gap prediction model to predict the rolling gap value.

11. The method according to any of the previous method claims, further comprising, after the adjusting of the position of the second roller (120), comparing a thickness of the electrode (10) that is rolled the first roller (110) and the second roller (120) to a preset reference thickness range and further adjusting the rolling gap when the thickness of the electrode (10) deviates from the reference thickness range.

12. The method according to any of the previous method claims, further comprising:
before the predicting of the rolling gap value, collecting process-related data including at least one of process data for a past set time, standard data, and derived data; and
generating the gap prediction model using the collected process-related data.

13. The method of claim 12, wherein in the generating the gap prediction model using the process-related data as an input characteristic and an electrode thickness as an output characteristic, factors necessary for modeling are selected by analyzing a correlation between the input characteristic and the output characteristic, the selected factors are applied to each of a plurality of machine learning models to predict the rolling gap value, performance of each machine learning model is evaluated based on the predicted rolling gap value, one of the machine learning models is selected based on the performance of each machine learning model, and the selected machine learning model is generated as the gap prediction model.

14. The method of claim 12, wherein in the generating of the gap prediction model, the gap prediction model is generated using an exponential function-based regression equation that uses the selected factors as inputs and outputs the rolling gap value.

15. The method according to any of the previous method claims, further comprising, before predicting the rolling gap value, receiving the gap prediction model from a server (300) and storing the gap prediction model,
wherein the server (300) collects process-related data including at least one of process data for a past set time, standard data, and derived data and generates the gap prediction model using the collected process-related data.
